# EUROPEAN PATENT APPLICATION

(11) **EP 3 029 901 A1**
(43) Date of publication of application: **08.06.2016**
(21) Application number: 14306936.7
(22) Date of filing: 02.12.2014
(51) Int. Cl.: H04L 27/26, H04B 7/06

(54) **A method for allocation of physical layer parameters of a signal, and a base station transceiver and a user terminal therefor**

(71) Applicant: ALCATEL LUCENT, 92100 Boulogne-Billancourt (FR)
(72) Inventor: Braun, Volker, 70435 Stuttgart (DE); Halbauer, Hardy, 70435 Stuttgart (DE); Baracca, Paolo, 70435 Stuttgart (DE)
(74) Representative: Kleinbub, Oliver

(57) **Abstract**

The invention concerns a method for allocation of physical layer parameters of a signal (CP_c, CP_d, CP_d1, CP_d2, CP_du1, CP_du2) to a wireless connection, wherein at least one physical layer parameter (CP_c, CP_d, CP_d1, CP_d2, CP_du1, CP_du2) is chosen dependent on a multi-path delay spread of the wireless connection, and a base station transceiver (BST) and a user terminal (UE) therefor.

## Description

### Field of the invention

The invention relates to a method for allocation of physical layer parameters of a signal to a wireless connection, and a base station transceiver and a user terminal adapted to perform said method.

### Background

With the increasing demand for data services, wireless systems tend to use more and more bandwidth and higher carrier frequencies. For example, Fifth Generation (5G) wireless access is expected to embrace mmWave frequencies to provide multi-Gbps data rates, typically in so-called femto, pico, or metro cell type of deployments. Path loss increases at higher frequencies and needs to be compensated by exploiting antenna directivity. This requires high gain adaptive beamforming (BF) solutions. The adaptive beam-steering may be implemented by analog phase shifters, fully digitally, i.e. equipping each antenna with a full digital transmit/receive path, or as a hybrid digital/analog solution, i.e. connecting each digital transmit/receive path to a set of antennas via analog phase shifters. Base station antenna arrays will include e.g. 16 or more antenna elements, as e.g. so-called tiny horn elements.

### Summary

Different beamformimg weights can be applied to data and control information of a user, typically using a higher beamforming gain, i.e. narrower beam, for data and a lower beamforming gain, i.e. wider beams, for control information. To compensate for the reduced beamforming gain, the control information can be better protected by means of coding. This solution has the advantage that the robust control channel can be maintained even in the presence of objects blocking some transmission paths, or in case of movements of the user. Data may be transmitted to a user using e.g. a narrow beamwidth antenna pattern with corresponding high beamforming gain, obtained by e.g. combined analog and digital beamforming. Control information for the user may be transmitted using e.g. an antenna pattern with wide beam width and corresponding low beamforming gain, covering a larger subsector or even the whole sector. This can be e.g. obtained by pure digital beamforming.

A problem of this solution is that the expected multi-path delay spread is larger for the control information than for the actual data, as increasing the beamforming gain reduces the delay spread. The delay spread in turn has impact on the physical layer numerology to be applied, e.g. in an Orthogonal Frequency Division Multiple Access (OFDM) case the delay spread determines the size of the cyclic prefix (CP). As the CP overhead should be limited, in turn also the OFDM symbol duration and subcarrier spacing are affected. For a given bandwidth, the higher the subcarrier spacing, the lower the OFDM symbol duration. However, there is an upper-limit on the subcarrier spacing which depends on the delay spread: When the delay spread increases, this upper-limit on the subcarrier spacing decreases.

This problem may also occur in cases where the beamforming gain is adapted in a user-specific manner, e.g. by using high beamforming gain for users at cell edge and using less beamforming gain for users with favorable channel conditions. In the latter case, pure digital beamforming, as will be described later in more detail, may be applied which allows better multiplexing of users in the frequency domain.

It is thus an object of the invention to apply the advantages of different beamforming gains in a resource-effective manner.

A solution to this problem is to match the CP length and other physical layer parameters to the worst case delay spread, i.e. the delay spread which corresponds to the lowest beamforming gain that can in principle occur. However, as a delay spread with a higher beamforming gain is substantially lower, the CP is over-dimensioned and radio resources will be wasted if a higher beamforming gain is applied.

According to embodiments of the invention, different physical layer numerologies are thus applied e.g.
- depending on the beamforming gain,
- for control information and data,
- or for different data assignments.

The physical layer numerologies comprise parameters such as length of a guard interval, symbol duration, sub-carrier spacing, filter length, or prefix duration.

Control and data parts of a radio frame can be separated by time division multiplexing (TDM). The control part may comprise acquisition signals, as e.g. synchronization signals, system information, pilot signals and/or an uplink random access preamble, and control signals, as e.g. scheduling grants, ACK/NACK signals, and uplink channel quality indicators (CQI)/precoding matrix indicators (PMI)/scheduling requests/buffer status. The position of the control part within a frame can be pre-defined, or some parts may be semi-statically or dynamically configured. The position of the control part within the frame can therefore be known to a user terminal, and different physical layer numerologies can be applied for the control part and the data part of a frame.

The physical layer numerology may also be adapted per data allocation depending on the beamforming applied for the data allocation. In this case the physical layer numerology applied for the data allocation over a certain time period may also be signaled via control signaling, cell-specific or user-specific within a scheduling grant. OFDM allows to adapt the physical layer numerology by TDM, i.e. consecutive OFDM symbols may use different physical layer numerologies. Filtered OFDM waveforms, as e.g. so-called universal-filtered OFMD (UF-OFDM) or filter bank multicarrier (FBMC), allow also to adapt a physical layer numerology over different subbands or frequency allocations within a time slot.

Delay spread information may be obtained via measurements, e.g. uplink measurements performed by a base station or measurement reports of a user terminal. The measurements may be performed for the different beamforming weights, and thus measurements per sector, sub-sector or for a so-called pencil beam can be performed. Such measurements may dynamically be performed per user, or alternatively some statistics may be collected by the base station after installation of the base station or with some period.

The CP length and other physical layer parameters of a signal are then adapted to the evaluated delay spread of a wireless connection.

The object of the invention is thus achieved by a method for allocation of physical layer parameters of a signal to a wireless connection, wherein at least one physical layer parameter of a signal is chosen dependent on a multi-path delay spread of the wireless connection.

The object of the invention is furthermore achieved by a base station transceiver for allocation of physical layer parameters of a signal to a wireless connection, wherein said base station transceiver is adapted to choose at least one physical layer parameter of a signal dependent on a multi-path delay spread of the wireless connection.

The object of the invention is furthermore achieved by a user terminal for communication in a wireless communication system, wherein said user terminal is adapted to perform measurements of downlink transmissions, and to evaluate said measurements of downlink transmissions to obtain a multi-path delay spread of a wireless connection.

In an embodiment of the invention, beamforming is applied leading to different multi-path delay spreads of the wireless connection dependent on a beamforming gain of the wireless connection.

In an embodiment of the invention, the at least one physical layer parameter of the signal is chosen dependent on the beamforming gain of the wireless connection.

In an embodiment of the invention, the beamforming gain of the wireless connection is different for a transmission of control data and user data, and the at least one physical layer parameter of the signal is chosen dependent on whether control data or user data are transmitted.

In an embodiment of the invention, the beamforming gain of the wireless connection is based on a channel quality of the wireless connection, and the at least one physical layer parameter of the signal is chosen dependent on the channel quality of the wireless connection.

In an embodiment of the invention, the beamforming gain of the wireless connection is pre-defined, semi-statically configured, or dynamically configured.

In an embodiment of the invention, the wireless connection is using dedicated time-frequency radio resources.

In an embodiment of the invention, a measurement of uplink transmission is performed to obtain the multi-path delay spread of the wireless connection, e.g. uplink measurements are performed by a base station transceiver based on pilot signals received from a user terminal.

In an embodiment of the invention, a measurement of downlink transmission is performed to obtain the multi-path delay spread of the wireless connection, e.g. downlink measurements are performed by a user terminal based on pilot signals received from a base station transceiver, and measurement results are reported to the base station transceiver by means of uplink control signaling.

In an embodiment of the invention, the at least one physical layer parameter is at least one of a group of guard interval length, symbol duration, sub-carrier spacing, cyclic prefix, and filter length.

In an embodiment of the invention, a base station transceiver signals the at least one physical layer parameter of the signal to a user terminal, and the user terminal applies the at least one physical layer parameter of the signal.

In an embodiment of the invention, a base station transceiver measures delay spreads of a multitude of wireless connections, and based on statistics of the delay spreads of the multitude of wireless connections the at least one physical layer parameter of the signal is chosen.

In an embodiment of the invention, the base station transceiver is adapted to evaluate measurements of downlink transmissions performed by a user terminal, or to perform measurements of uplink transmissions, and to evaluate said measurements of uplink transmissions to obtain the multi-path delay spread of the wireless connection.

In an embodiment of the invention, the user terminal is adapted to transmit information on said multi-path delay spread of a wireless connection to a base station transceiver.

Further developments of the invention can be gathered from the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows a base station transceiver and an antenna with antenna elements using combined digital and analog beamforming.
Fig. 4 schematically shows a downlink slot structure for an acquisition slot and a data slot.
Fig. 5 schematically shows examples for adapted cyclic prefixes according to embodiments of the invention.

### Description of the embodiments

The invention is described in the following within the framework of 3GPP LTE. However the invention is not restricted to 3GPP LTE or enhancements thereof, like LTE-Advanced (LTE-A), but can in principle be applied in other networks that can use beamforming, like e.g. a High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc. The invention may also be applied in future networks, like e.g. in 5G networks. In the following, instead of the term eNodeB used in LTE, the more general term base station is used.

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms, including technical and scientific terms, used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the sequel we assume an air interface using multi-carrier modulation scheme such as OFDM, or possibly some filtered OFDM solutions such as UF-OFDM or FBMC. However, the proposal can in principle also be applied to other modulation techniques, e.g. single carrier techniques with prefix/postfix blocks.

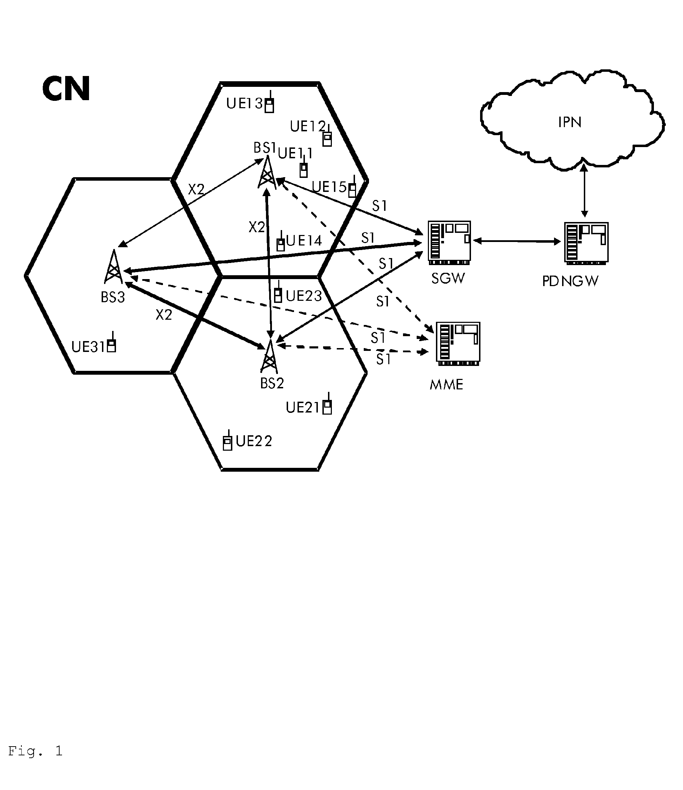

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

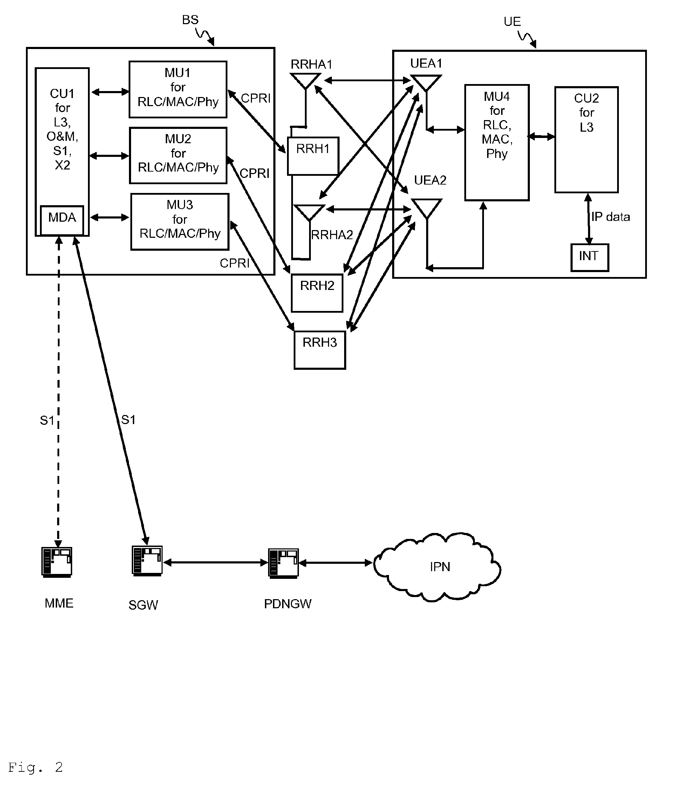

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity. As an alternative, the remote radio heads RRH1, RRH2, and RRH3 can be included in the base station BS.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analog way in the reverse direction from the user terminal UE to the external IP network IPN.

The base station BS can be operable to communicate with one or more active user terminals UE and a base station can be located in or adjacent to a coverage area of another base station, e.g. a macro cell base station or small cell base station. Hence, embodiments may provide a mobile communication system comprising one or more user terminals and one or more base stations, wherein the base stations may establish macro cells or small cells, as e.g. pico-, metro-, or femto cells. A user terminal may correspond to a smartphone, a cell phone, user equipment, a laptop, a notebook, a personal computer, a Personal Digital Assistant (PDA), a Universal Serial Bus (USB) - stick, a car, a sensor for sensor networks, which might transmit and receive data with or without the interaction of a human being and other fixed installed or mobile communication devices able to transmit and receive data, etc. A user terminal may also be referred to as User Equipment or mobile in line with the 3GPP terminology.

A base station can be located in the fixed or stationary part of the network or system. A base station may correspond to a transmission point, an access point, a macro cell, a small cell, a micro cell, a femto cell, a metro cell etc. A base station may comprise the functionality of a remote radio head as depicted in fig. 2 and described above. A base station can be a wireless interface of a wired network, which enables transmission of radio signals to a user terminal. Such a radio signal may comply with radio signals as, for example, standardized by 3GPP or, generally, in line with one or more of the above listed systems. Thus, a base station may correspond to a NodeB, an eNodeB, a Base Transceiver Station (BTS), an access point, a remote radio head, a transmission point etc., which may be further subdivided in a remote unit and a central unit.

A user terminal can be associated, camped on, or registered with a base station or cell. The term cell refers to a coverage area of radio services provided by a base station, e.g. a NodeB (NB), an eNodeB (eNB), a remote radio head, a transmission point, etc. A base station may operate one or more cells on one or more frequency layers, in some embodiments a cell may correspond to a sector. For example, sectors can be achieved using sector antennas, which provide a characteristic for covering an angular section around a remote unit or base station. In some embodiments, a base station may, for example, operate three or six cells covering sectors of 120° (in case of three cells), 60° (in case of six cells) respectively. A base station may operate multiple sectorized antennas. In the following a cell may represent an according base station generating the cell or, likewise, a base station may represent a cell the base station generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station for which their coverage areas are determined by their transmission power and interference condition. In some embodiments a small cell's coverage area can at least partly be surrounded by the coverage area of a macro cell established by another base station. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below 100 m. A femto cell may be the smallest cell and it may be used to cover a household or gate section at the airport, i.e. its coverage area may have a diameter below 50m. Thus, a base station may also be referred to as cell.

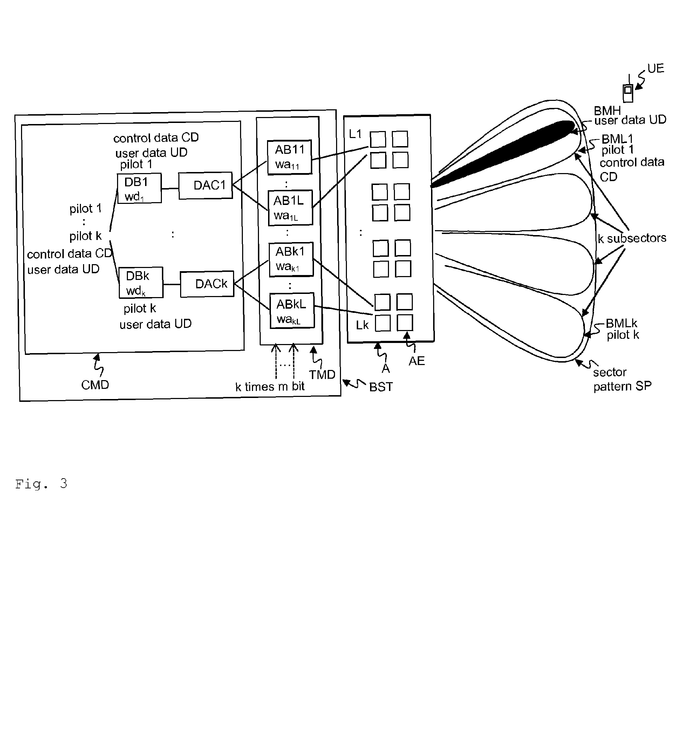

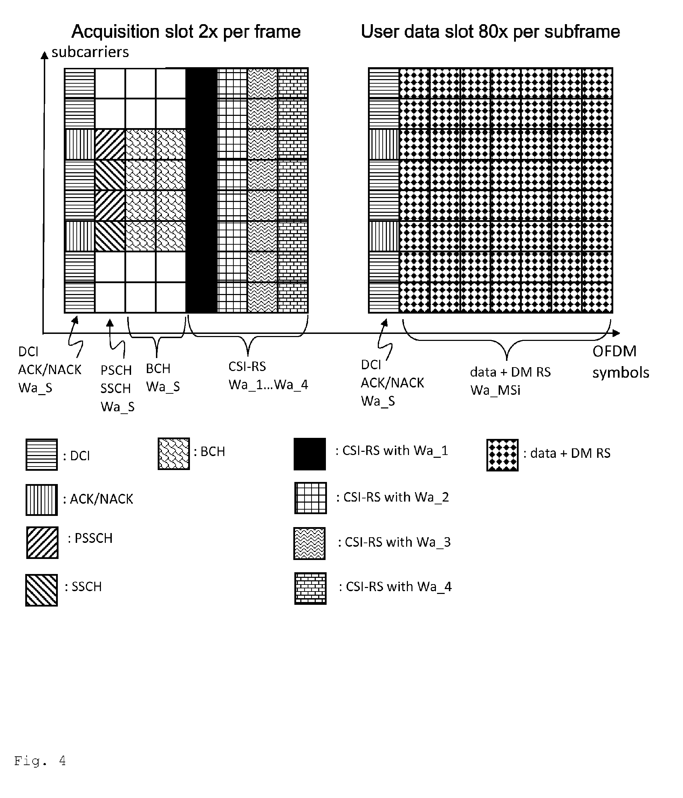

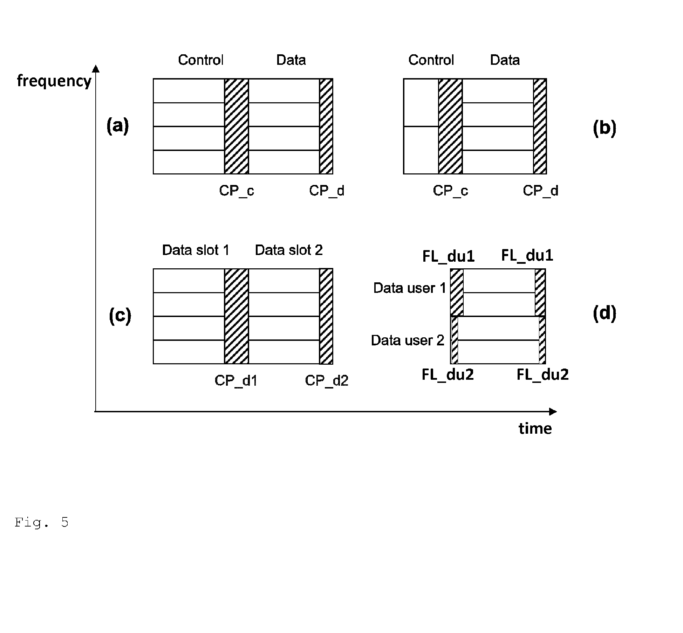

In the sequel, first in fig. 3 and the respective description, a base station transceiver and an antenna with antenna elements using combined digital and analog beamforming is shown, and then in fig. 4, an example of a downlink slot structure for an acquisition slot and a data slot with different analog beamforming weights dependent on the usage of the resource elements is shown. Finally, in fig. 5 four examples for adapted cyclic prefixes dependent on the usage of the resource elements according to embodiments of the invention is shown.

Fig. 3 schematically shows a base station transceiver and an antenna with antenna elements using combined, i.e. hybrid, digital and analog beamforming. Processing modules related e.g. to coding, modulation, upconversion and amplification, as e.g. depicted in fig. 1 and described above, are not depicted in fig. 3 for the sake of simplicity.

Said base station transceiver BST comprises a control module CMD, and a transceiver module TMD. The control module CMD comprises in turn k digital beamforming modules DB1-DBk, and k digital to analog converters DAC1-DACk. The transceiver module TMD comprises L•k analog beamforming modules AB11-ABkL. The digital beamforming modules DB1-DBk can be implemented either in distinct hardware modules, or as pure software modules.

The antenna A comprises k subarrays L1-Lk of antenna elements, each subarray L1-Lk comprising L antenna elements.

In the embodiment depicted in fig. 3, the control module CMD comprises by way of example k=4 digital beamforming modules DB1-DBk, and k=4 digital to analog converters DAC1-DACk, and each subarray L1-Lk comprises by way of example L=4 antenna elements.

The control module CMD comprises k digital paths, each of them comprising a digital beamforming module DB1-DBk, and a digital to analog converter DAC1-DACk. Each digital path is connected via L analog beamforming modules AB11-ABkL to a preferably disjoint subarray L1-Lk of L antenna elements AE.

In other words, in the embodiment depicted in fig. 3 the plurality of antenna elements AE is implemented as a field array of L•k antenna elements AE. Moreover, the plurality of antenna elements AE is subdivided in subgroups, where to each of the subgroups it is also referred to as subarray L1-Lk.

In the embodiment depicted in fig. 3 the transceiver module TMD comprises analog BF capability, where it may be assumed that independent analog BF can be applied within each subarray comprising analog beamforming modules ABn1-ABnL with n∈{1,2...k} for transmission and reception of signals. In the present embodiment the control module CMD carries out digital BF, which is applied in the k digital paths. In fig. 3 the control module CMD comprises one digital to analog converter DAC1-DACk per subarray 1..k, and it is assumed that the control module CMD applies adapted complex weights wd₁..wd_{K} in the according paths. It is to be noted that the control module CMD may further be operable to control the analog BF at the transceiver module TMD to a certain extent. For example, the control module CMD or another control entity may be responsible to adjust analog BF weights wa₁₁..wa_{kL} of the analog beamforming modules AB11-ABkL, e.g. by means of k digital control interfaces, each having m bit, or to select input port(s) in case an analog Butler matrix is applied for analog BF.

The transceiver module TMD applies analog BF, which may, for example, be carried out by means of analog phase shifters or a Butler matrix. In other words, in the embodiment depicted in fig. 3 the transceiver module TMD applies analog BF weights within each subarray 1...k, to use each subarray to form a certain beam, a set of beams, respectively. The according analog weight application is depicted in Fig. 3 by means of analog multiplication of the weights wa₁₁..wa_{KL} with the respective signal.

Thus, in the embodiment depicted in fig. 3 combined, i.e. hybrid, digital/analog BF is used which provides reduced complexity compared to fully digital BF implementations.

In the embodiment depicted in fig. 3, digital and analog beamforming is performed in the base station transceiver BST, whereas up- and downconversion and amplification may be performed in the transceiver module TMD, or may alternatively be performed in the antenna A, which may e.g. correspond to a remote radio head RRH1 with remote radio head antenna RRHA1 as depicted in fig. 2 and described above. However, in other embodiments, the functionality of the transceiver module TMD, and/or the functionality of the control module CMD can be implemented in a remote radio head RRH1 as depicted in fig. 2 and described above.

Fig. 3 further illustrates an individual sector pattern SP, which is assumed to cover a sector of the base station BS. Moreover fig. 3 illustrates a set of first beam patterns BML1...BMLk, with one subarray L1...Lk of L antenna elements may be being used for each of said first beam patterns BML1...BMLk, and an example of a second beam pattern BMH, for which all antenna elements of all subarrays L1-Lk may be used in the present embodiment as will be detailed subsequently. As indicated in fig. 3, different pilot signals pilot 1...pilot k may be used in different subsectors using different first beam patterns BML1...BMLk e.g. by application of different subarrays L1...Lk of L antenna elements. Moreover, user data for an individual user terminal may be sent using e.g. the second beam pattern BMH. Moreover, in the embodiment depicted in fig. 3, it is assumed that k=4 and L=4. It is assumed that each of the 16 transmit/receive antenna elements has 7dBi element gain, that is to say 7dBi sector gain for the individual sector pattern SP. Using all 16 transmit/receive antenna elements AE, a 19 dBi pencil beam, as e.g. the second beam pattern BMH, may be realized by the above described hybrid analog/digital BF involving all available antenna elements L1-Lk. Furthermore, it is assumed that all antenna elements illuminate the same sector, for example a 60° or a 90° sector.

Subsectorization, as e.g. k orthogonal/adjacent subsectors at the time as indicated in fig. 3 achieved by the set of first beam patterns BML1...BMLk, can be implemented by analog beamforming using k times m bits which are provided to, for example, analog phase shifters in the transceiver module TMD.

In alternaive embodiments, said subsectorization achieved by the set of first beam patterns BML1...BMLk can be implemented by digital beamforming, while the analog beamforming uses predefined sector weights. In other words, the k digital beamforming modules DB1-DBk, and the k digital to analog converters DAC1-DACk are used for achieving directivity of beams, while analog beamforming with predefined sector weights is used for irradiating the whole sector. Thus, said method represents a kind of pure digital beamforming.

In alternative embodiments, a sector can be partitioned with narrower beams, e.g. a grid of 16 beams with 19dBi gain can be formed with combined analog and digital BF using the base station transceiver BST and the antenna A of fig. 3.

According to embodiments, different BF weights are applied for transmission of data and control information of a user, typically using a higher BF gain, i.e. a narrower beam, for transmission of user data information and a lower BF gain, i.e. a wider beam, for transmission of control information to the user.

Thus, in the embodiment depicted in fig. 3, in the control module CMD, control data CD for the user terminal UE are processed using only the first digital path with the digital beamforming module DB1 and the digital to analog converter DAC1. Then, the control data CD for the user terminal UE are transmitted to the analog beamforming modules AB11-AB1L in the transceicer module TMD in which analog beamforming is performed using analog phase shifters which are controlled by k times m bits provided to the transceiver module TMD. By the analog beamforming, the control data CD for the user terminal UE are transmitted from the analog beamforming modules AB11-AB1L to the respective antenna element of the subarray L1 comprising L antenna elements, i.e. 4 antenna elements in the embodiment depicted in fig. 3. In other words, each of the analog beamforming modules AB11-AB1L is connected to one antenna element of the subarray L1. The control data CD for the user terminal UE are transmitted in the first subsector in the first beam pattern BML1. Control data CD for the user may be transmitted using a 13dBi subsector beam, e.g. obtained by analog beamforming using k times m bits which are provided to analog phase shifters in the transceiver module TMD as mentioned above.

In an alternative embodiment, control data CD for the user terminal UE can be transmitted using digital beamforming for implementing the set of first beam patterns BML1...BMLk, while the analog beamforming uses predefined sector weights. In other words, the k digital beamforming modules DB1-DBk are used for achieving directivity of the set of first beam patterns BML1...BMLk used for transmission of control data CD for the user terminal UE, while analog beamforming with predefined sector weights is used for irradiating the whole sector.

In contrast to the transmission of control data CD for the user terminal UE, in the control module CMD, user data UD for the user terminal UE are processed using all k digital paths with the digital beamforming modules DB1...DBk and the digital to analog converters DAC1...DACk, with k=4 in the embodiment depicted in fig. 3. Then, the user data UD for the user terminal UE are transmitted from the control module CMD dependent on the digital path to the respective set of L analog beamforming modules ABn1-ABnL in the transceicer module TMD in which analog beamforming is performed using analog phase shifters which are controlled by k times m bits provided to the transceiver module TMD. Thus, all L•k antenna elements AE, 16 in the embodiment depicted in fig. 3, are used for analog beamforming, and each of the analog beamforming modules AB11-ABkL is connected to one antenna element of the subarrays L1...Lk. By the analog beamforming, the user data UD for the user terminal UE are transmitted from the analog beamforming modules AB11-ABkL to the respective antenna element of all subarrays L1-Lk comprising L•k antenna elements, i.e. 16 antenna elements in the embodiment depicted in fig. 3. Then the user data UD for the user terminal UE are transmitted in the first subsector in the second beam pattern BMH. Thus, user data UD for the user may be transmitted using a 19dBi pencil beam, obtained by combined analog and digital BF.

The k different pilot signals pilot 1...pilot k are processed in the control module CMD using the respective digital path 1...k with the respective digital beamforming module DB1...DBk and the respective digital to analog converter DAC1...DACk. Then, the pilot signals pilot 1...pilot k are transmitted to the respective set of analog beamforming modules ABn1-ABnL in the transceiver module TMD in which analog beamforming is performed using analog phase shifters which are controlled by k times m bits provided to the transceiver module TMD. By the analog beamforming, the pilot signals pilot 1...pilot k are transmitted from the respective set of analog beamforming modules ABn1-ABnL to the respective antenna element of the respective subarray L1...Lk comprising L antenna elements, i.e. 16 antenna elements in the embodiment depicted in fig. 3. The pilot signals pilot 1...pilot k are transmitted in the respective subsector 1...k in the respective first beam pattern BML1...BMLk. Pilot signals pilot 1...pilot k may be transmitted using a 13dBi subsector beam, e.g. obtained by analog beamforming using k times m bits which are provided to analog phase shifters in the transceiver module TMD as mentioned above.

In an alternative embodiment, pilot signals pilot 1...pilot k can be transmitted using digital beamforming for implementing the set of first beam patterns BML1...BMLk, while the analog beamforming uses predefined sector weights. In other words, the k digital beamforming modules DB1-DBk are used for achieving directivity of the set of first beam patterns BML1...BMLk used for transmission of the pilot signals pilot 1...pilot k, while analog beamforming with predefined sector weights is used for irradiating the whole sector.

In an embodiment, the user terminal UE is served by multiple beams. i.e. the user terminal UE receives user data via multiple beams to boost data rates or reliability of the data link. In this case, control data may not be transmitted via multiple beams. Instead control data are transmitted over a single broader beam, e.g. one out of a grid of subsectors as described above. In an alternative of the embodiment, control data may be transmitted over multiple beams, e.g. two beams out of a grid of subsectors, possibly neighboring beams. This may be e.g. useful if the user terminal UE is moving, so that reliability of the control link is further improved.

In an embodiment, closed-loop beamforming is applied. Closed-loop precoding feedback according to the embodiment requires separate precoding feedback from the user terminal UE to the base station transceiver BST for user data and control data, and the feedback could be e.g. a strongest-beam indicator determined from a per-beam pilot signal, or a precoding matrix indicator determined from a per-antenna or per-beam pilot signal.

In embodiments of the invention, as partly already described above, the different beams for user data and control data for a user terminal can be applied with pure digital, pure analog or hybrid analog/digital BF implementations.

When applying a pure analog BF by means of a Butler matrix, the control data signaling may be fed to multiple input ports, or a single input port, of the Butler matrix.

With hybrid analog/digital BF, the control data signaling may be transmitted over a single subarray of antenna elements, or multiple subarrays of antenna elements, corresponding e.g. to one or several of the k digital paths, one or several of the sets of analog beamformimg modules ABn1...ABnL, and one or several of the subarrays of antenna elements L1...Lk as depicted in fig. 3.

With pure digital BF, the width of the beams can be tuned simply by using adequate digital BF weights, e.g. by using sub-sector beam weights for control data signaling and by using pencil beam weights for user data transmission.

By applying one of the above methods, a wider beam for the control data signaling can be obtained.

In embodiments of the invention, combined digital/analog beamforming can be applied in a more general way. In the digital domain depicted in fig. 3, there is only one digital BF weight wdₖ for each digital path k, but a more general solution would consider k•k digital BF weights in order to enable multistream transmission. In the analog domain depicted in fig. 3, each digital path k is connected to a subarray Lk, and all the subarrays L1...Lk are disjoint, hence the number of analog BF weights wa₁₁...wa_{kL} is only k•L. A more general solution would allow to connect each digital output to each antenna element AE for a total number of analog BF weights of k•k•L.

Thus, as a summary of the above-described, the base station transceiver BST as depicted in fig. 3 may e.g. be used to transmit data to a user terminal UE using a 19dBi narrow beam BMH, obtained by combined analog and digital beamforming, or may e.g. be used to transmit control information for the user terminal using a 13dBi subsector beam BML1, e.g. obtained by pure digital beamforming.

In fig. 4, an example of a downlink slot structure for an acquisition slot and a data slot with different analog beamforming weights dependent on the usage of the resource elements is shown.

A downlink transmission may be partitioned into acquisition slots as exemplarily depicted on the left side in fig. 4, and data slots as exemplarily depicted on the right side in fig. 4. The x-axis indicates the time in OFDM symbols, and the y-axis indicates the frequency in subbands for the acquisition slot and the data slot.

In the embodiments depicted in fig. 4, it is assumed that the analog beamforming weights can be switched between OFDM symbols, with Wa_S denoting a set of analog beamforming weights wa₁₁...wa_{kL} used for generation of the sector pattern SP as e.g. described above and depicted in fig. 3, Wa_j, with j=1,2,3,4, denoting a set of analog beamforming weights wa₁₁...wa_{kL} used for generation of the subsector beam #j as e.g. described above and depicted in fig. 3 and denoted BML1...BMLk, and Wa_MSi denoting a set of analog beamforming weights wa₁₁...wa_{kL} optimized for serving the user terminal #i by the narrow beam BMH. Digital beamforming is applied together with the analog beamforming weights wa₁₁...wa_{kL} to serve the full 7dBi sector, four 13dBi subsectors at a time, or one user terminal with a 19dBi beam at a time, respectively.

Both acquisition and data slots may carry downlink (DL) control signaling, as e.g. DL ACK/NACK and UL/DL scheduling grants comprised in downlink control information (DCI) together with demodulation reference signals, e.g. in the first OFDM symbol of a slot as depicted in fig. 4, in order to enable uninterrupted transmission in uplink (UL). The DCI and ACK/NACK in the first OFDM symbol is transmitted using the set of analog beamforming weights Wa_S for generation of the sector pattern SP.

A DL acquisition slot may additionally carry synchronization signals, e.g. in a primary synchronization channel (PSCH) and a secondary synchronization channel (SSCH) e.g. in the second OFDM symbol depicted in fig. 4, and system information in a broadcast channel (BCH) e.g. in the 3^{rd} and 4^{th} OFDM symbols depicted in fig. 4, all of them being transmitted by applying a set of analog beamforming weights Wa_S for generation of the sector pattern SP.

A DL acquisition slot may further carry k•L, which is 16 in the example depicted in fig. 3, beam-specific pilot signals, i.e. channel state information reference signals (CSI-RS), e.g. in OFDM symbols 5 to 8, four orthogonal CSI-RS sequences at a time, for beam selection, transmitted by applying the analog set of beamforming weights Wa_i, i=1-4, one Wa_i at a time.

Actual user data and demodulation reference signals (DM RS) are transmitted in the data slots, as e.g. depicted on the right side in fig. 4, e.g. with a user terminal specific set of analog beamforming weights Wa_MSi.

The use of the different sets of beamforming weights Wa_S, Wa_i, i=1-4, and Wa_MSi, is related with different beamforming gains as described above. The higher the beamforming gain is, the lower the multi-path delay spread is. The delay spread in turn has impact on the physical layer numerology to be applied, e.g. in an Orthogonal Frequency Division Multiple Access (OFDM) case the delay spread determines the size of the cyclic prefix (CP). As the CP overhead should be limited, in turn also the OFDM symbol duration and subcarrier spacing are affected. For a given bandwidth, the higher the subcarrier spacing, the lower the OFDM symbol duration. However, there is an upper-limit on the subcarrier spacing which depends on the delay spread: when the delay spread increases, this upper-limit on the subcarrier spacing decreases.

Fig. 5 schematically shows four examples for adapted cyclic prefixes dependent on the usage of the resource elements according to embodiments of the invention. The resource elements are depicted over time and frequency in fig. 5.

In the embodiment denoted with (a), a cyclix prefix CP_c used for a control part is longer than a cyclic prefix CP_d used for a data part. Control and data parts are separated by time division multiplexing (TDM), as applicable with OFDM. In the embodiment, it is assumed that control information are transmitted over the 7dBi sector pattern SP or the 13dBi subsector beam BML1, and data over the 19dBi narrow beam BMH, as e.g. depicted in fig. 3 and described above, which leads to a higher multi-path delay spread for the control part compared to the data part.

In the embodiment denoted with (b), a control part uses a shorter OFDM symbol duration and a larger cyclic prefix CP_c, as compared to a data part using the cyclic prefix CP_d. Control and data parts are separated by TDM, as applicable with OFDM. Again, it is assumed that control information are transmitted over the 7dBi sector pattern SP or the 13dBi subsector beam BML1, and data over the 19dBi narrow beam BMH, as e.g. depicted in fig. 3 and described above, which leads to a higher multi-path delay spread for the control part compared to the data part. Shortening the symbol duration for the control information may make the control part more robust in the presence of user mobility.

In the embodiment denoted with (c) a cyclic prefix CP_d1 used in a first data slot is longer than a cyclic prefix CP_d2 used in a second data slot. Data slots 1 and 2 are separated by TDM, as applicable with OFDM. In the embodiment, it is assumed that the data slot 1 is transmitted over the 7dBi sector pattern SP or the 13dBi subsector beam BML1, and the data slot 2 over the 19dBi narrow beam BMH, as e.g. depicted in fig. 3 and described above, which leads to a higher multi-path delay spread for the data slot 1 compared to the data slot 2.

In the embodiment denoted with (d), data allocations for user 1 and user 2 are separated by frequency division multiplexing (FDM), and user 1 uses a longer filter length than user 2, so that a filter length FL_du1 used in a data slot for user 1 is longer than a filter length FL_du2 used in a data slot for user 2. The embodiment is applicable e.g. with filtered multicarrier waveforms such as universal-filtered OFMD (UF-OFDM) or filter bank multicarrier (FBMC). User 1 may receive data over the 7dBi sector or a 13dBi subsector, and user 2 over 19dBi narrow beam. In the embodiment, it is assumed that the data for user 1 is transmitted over the 7dBi sector pattern SP or the 13dBi subsector beam BML1, and the data for user 2 over the 19dBi narrow beam BMH, as e.g. depicted in fig. 3 and described above, which leads to a higher multi-path delay spread for the data for user 1 compared to the data for user 2.

In the embodiments depicted in fig. 5, and specifically in the embodiment depicted in fig. 5(b), the subcarrier spacing, and in turn the OFDM symbol duration, is not related to the delay spread of the channel, but to the Doppler spread, which increases with the user mobility. In fact, a system is more robust to the user mobility when the subcarrier spacing is higher. Therefore, in fig. 5(b) the subcarrier spacing for the control information transmission is increased in order to make the control information transmission more robust, and the increase of the subcarrier spacing for the control information transmission proposed in fig. 5(b) is done not because of a different delay spread due to the different beamforming gain, but to achieve a higher robustness in mobile scenarios.

In the embodiments described above and depicted e.g. in figs. 3, 4 and 5, the corresponding processing steps can be performed e.g. in the modem unit boards MU1-MU4 and the control unit board CU1, CU2 of the base station BS and the user terminal UE respectively as depicted in fig. 2 and described above.

## Claims

1. A method for allocation of physical layer parameters of a signal (CP_c, CP_d, CP_d1, CP_d2, FL_du1, FL_du2) to a wireless connection, wherein at least one physical layer parameter of a signal (CP_c, CP_d, CP_d1, CP_d2, FL_du1, FL_du2) is chosen dependent on a multi-path delay spread of the wireless connection.

2. A method according to claim 1, wherein beamforming is applied leading to different multi-path delay spreads of the wireless connection dependent on a beamforming gain of the wireless connection.

3. A method according to claim 2, wherein the at least one physical layer parameter of the signal (CP_c, CP_d, CP_d1, CP_d2, FL_du1, FL_du2) is chosen dependent on the beamforming gain of the wireless connection.

4. A method according to claim 2, wherein said beamforming gain of the wireless connection is different for a transmission of control data (CD) and user data (UD), and the at least one physical layer parameter of the signal (CP_c, CP_d, CP_d1, CP_d2, FL_du1, FL_du2) is chosen dependent on whether control data (CD) or user data UD) are transmitted.

5. A method according to claim 2, wherein said beamforming gain of the wireless connection is based on a channel quality of the wireless connection, and the at least one physical layer parameter of the signal (CP_c, CP_d, CP_d1, CP_d2, FL_du1, FL_du2) is chosen dependent on the channel quality of the wireless connection.

6. A method according to any of the claims 2 to 5, wherein the beamforming gain of the wireless connection is predefined, semi-statically configured, or dynamically configured.

7. A method according to any of the claims 2 to 6, wherein the wireless connection is using dedicated time-frequency radio resources.

8. A method according to any of the preceding claims, wherein a measurement of uplink or downlink transmission is performed to obtain the multi-path delay spread of the wireless connection.

9. A method according to any of the preceding claims, wherein said at least one physical layer parameter of the signal (CP_c, CP_d, CP_d1, CP_d2, FL_du1, FL_du2) is at least one of a group of guard interval length, symbol duration, sub-carrier spacing, cyclic prefix and filter length.

10. A method according to any of the preceding claims,
wherein a base station transceiver (BST) signals the at least one physical layer parameter of the signal (CP_c, CP_d, CP_d1, CP_d2, FL_du1, FL_du2) to a user terminal (UE), and the user terminal (UE) applies the at least one physical layer parameter of the signal (CP_c, CP_d, CP_d1, CP_d2, FL_du1, FL_du2).

11. A method according to any of the preceding claims,
wherein a base station transceiver (BST) measures delay spreads of a multitude of wireless connections, and based on statistics of the delay spreads of the multitude of wireless connections the at least one physical layer parameter of the signal (CP_c, CP_d, CP_d1, CP_d2, FL_du1, FL_du2) is chosen.

12. A base station transceiver (BST) for allocation of physical layer parameters of a signal (CP_c, CP_d, CP_d1, CP_d2, FL_du1, FL_du2) to a wireless connection, wherein said base station transceiver (BST) is adapted to choose at least one physical layer parameter of the signal (CP_c, CP_d, CP_d1, CP_d2, FL_du1, FL_du2) dependent on a multi-path delay spread of the wireless connection.

13. A base station transceiver (BST) according to claim 12, wherein said base station transceiver (BST) is adapted to evaluate measurements of downlink transmissions performed by a user terminal, or to perform measurements of uplink transmissions, and to evaluate said measurements of uplink transmissions to obtain the multi-path delay spread of the wireless connection.

14. A user terminal (UE) for communication in a wireless communication system, wherein said user terminal (UE) is adapted to perform measurements of downlink transmissions, and to evaluate said measurements of downlink transmissions to obtain a multi-path delay spread of a wireless connection.

15. A user terminal (UE) according to claim 14, wherein said user terminal (UE) is adapted to transmit information on said multi-path delay spread of a wireless connection to a base station transceiver (BST).
